# EUROPÄISCHE PATENTANMELDUNG

(11) **EP 0 740 483 A2**
(43) Veröffentlichungstag der Anmeldung: **30.10.1996**
(21) Anmeldenummer: 96105738.7
(22) Anmeldetag: 11.04.1996
(51) Int. Cl.: H04Q 7/38, H04M 3/54

(54) **Verfahren zum Verbindungsaufbau für Anrufe für Funkteilnehmer mit bedingter Anrugumlenkung**

(30) Priorität: 25.04.1995 DE 19515160
(71) Anmelder: SIEMENS AKTIENGESELLSCHAFT, 80333 München (DE)
(72) Erfinder: Wiehe, Ulrich, 36251 Bad Hersfeld (DE)

(57) **Zusammenfassung**

Dadurch, daß von der Mobilvermittlungsstelle im Ursprungs-Mobilfunknetz des anrufenden Funkteilnehmers eine Anfrage (PTM) zu einer zentralen Teilnehmerdatenbasis (HLR) im Heimat-Mobilfunknetz des umgelenkten Funkteilnehmers gerichtet wird, mit der vorübergehend eine temporäre internationale Funkteilnehmerrufnummer (z.B. TMSIN1) vergeben und temporäre Daten (z.B. SNC, AGMA) für den Verbindungsaufbau zu einem dritten Teilnehmer aufgrund der bedingten Anrufumlenkung angelegt werden können, erkennt die zentrale Teilnehmerdatenbasis (HLR), daß eine von der Mobilvermittlungsstelle im Heimat-Mobilfunknetz eintreffende Aufenthaltsabfrage (SRI') nicht wie üblich zu behandeln ist. Empfängt nämlich die zentrale Teilnehmerdatenbasis (HLR) innerhalb einer mit der Anfrage gestarteten Überwachungszeit eine Aufenthaltsabfrage (SRI') mit einer temporären internationalen Funkteilnehmerrufnummer (z.B. TMSIN1), werden die mit der Anfrage (PTM) bereitgestellten temporären Daten (z.B. SNC, AGMA) für den weiteren Verbindungsaufbau ausgesendet und danach gelöscht. Die Verbindung zum dritten Teilnehmer wird dann auf Grund der temporären Daten (z.B. SNC, AGMA) direkt oder über das Heimat-Mobilfunknetz aufgebaut.

## Beschreibung

Die Erfindung betrifft ein Verfahren zum Verbindungsaufbau für Anrufe, die von einem aus einem Ursprungs-Mobilfunknetz anrufenden Funkteilnehmer ausgelöst und an einen Funkteilnehmer gerichtet werden, der sich in einem Ziel-Mobilfunknetz befindet und für den eine bedingte Anrufumlenkung zu einem dritten Teilnehmer eingerichtet ist.

In dem länderübergreifenden digitalen, zellular aufgebauten Mobilfunknetz nach dem GSM-Standard (Global System for Mobile Communication), das beispielsweise aus dem Aufsatz "D900-Mobile Communication, System Description, Siemens AG 1992, Bestell-Nr. A30808-X-2-3231-X2-7618 bekannt ist, gibt es eigene Netzbetreiber für die Mobilfunknetze in den verschiedenen Ländern. Für die in einem Mobilfunknetz eines Landes eintreffenden Anrufe (mobile terminated calls) verfügt jedes Mobilfunknetz über mindestens eine Mobilvermittlungsstelle (Gateway Mobile Switching Center), von der der jeweilige Anruf empfangen und die Verbindung zum angerufenen Funkteilnehmer aufgebaut wird. Erkennt die Mobilvermittlungsstelle anhand der für den Funkteilnehmer reservierten internationalen Funkteilnehmerrufnummer, daß eine Verbindung zu einem Funkteilnehmer eines fremden Netzes aufgebaut werden soll, wird eine Aufenthaltsabfrage (Interrogation) gestartet. Befindet sich der angerufene Funkteilnehmer momentan nicht in seinem Heimat-Mobilfunknetz, sondern in einem anderen Netz, dem Ziel-Mobilfunknetz, kann entweder eine direkte Verbindung zwischen dem Ursprungs-Mobilfunknetz des anrufenden Funkteilnehmers und dem Ziel-Mobilfunknetz des angerufenen Funkteilnehmers oder eine Verbindung zwischen beiden Teilnehmern über das Heimat-Mobilfunknetz des angerufenen Funkteilnehmers aufgebaut werden. Die direkte Verbindung wird im Hinblick auf eine optimierte Wegeauswahl wegen der kürzeren Verbindungsaufbauzeit und der geringeren Leitungsbelegung vorgezogen.

Im Falle einer für den angerufenen Funkteilnehmer eingerichteten bedingten Anrufumlenkung (conditional call forwarding) zu einem dritten Teilnehmer muß die direkte Verbindung zwischen den Funkteilnehmern bei Anrufumlenkung abgebaut werden, bevor eine neue Verbindung vom anrufenden Funkteilnehmer zum dritten Teilnehmer zu suchen ist. Ist das Ergebnis dieser Verbindungssuche, daß die Verbindung nicht direkt, sondern über das Heimat-Mobilfunknetz des angerufenen Funkteilnehmers geführt werden muß, kommt es zu folgendem Problem. Das Heimat-Mobilfunknetz hat keine Kenntnis davon, daß die Verbindung umgelenkt wurde. Dies hat zur Folge, daß die Anrufumlenkung insgesamt zweimal durchlaufen wird, sowie eine lange Verbindungsaufbauzeit und ein hoher Signalisierungsaufwand in Kauf genommen werden müssen.

Wenn beispielsweise die umgelenkte Verbindung zum dritten Teilnehmer für den anrufenden Funkteilnehmer im Hinblick auf die Gesprächsgebühren teurer ist als die Verbindung über das Heimat-Mobilfunknetz des angerufenen Funkteilnehmers, kollidiert die durch die direkte Verbindung gegebene optimale Wegeauswahl mit dem Anliegen des anrufenden Funkteilnehmers nach möglichst minimalen Gebühren. Es ist die über das Heimat-Mobilfunknetz des angerufenen Funkteilnehmers verlaufende billigere Verbindung aus der Sicht des anrufenden Funkteilnehmers vorzuziehen. Dabei muß nach dem Abbau der Verbindung allerdings die Anrufumlenkung nochmals durchlaufen und damit eine längere Verbindungsaufbauzeit und ein höherer Signalisierungsaufwand gegenüber der optimalen Wegeauswahl als Nachteil in Kauf genommen werden.

Bei einer Verbindung vom anrufenden Funkteilnehmer zum umgelenkten Funkteilnehmer über dessen Heimat-Mobilfunknetz müßte ebenfalls die Verbindung zum anrufenden Funkteilnehmer hin abgebaut werden, um vom Ursprungs-Mobilfunknetz aus eine direkte Verbindung zum dritten Teilnehmer herstellen zu können. Ein Anwendungsbeispiel für letztgenannten Fall liegt vor, wenn ein aus dem deutschen Mobilfunknetz kommender Anruf eines Funkteilnehmers an einen angerufenen Funkteilnehmer im französischen Mobilfunknetz gerichtet wird und aufgrund der für ihn eingestellten Anrufumlenkung zu einem dritten Teilnehmer umgelenkt wird, der als Festnetzteilnehmer am öffentlichen deutschen Fernsprechnetz angeschlossen ist. Dann wäre nach der Anrufumlenkung eine direkte Verbindung nur in Deutschland die optimale Verbindung.

Aufgabe der vorliegenden Erfindung ist es daher, ein Verfahren zum Verbindungsaufbau für Anrufe zwischen einem aus einem Ursprungs-Mobilfunknetz anrufenden Funkteilnehmer und einem umgelenkten Funkteilnehmer in einem Ziel-Mobilfunknetz zu schaffen, durch das bei bedingter Anrufumlenkung zu einem dritten Teilnehmer die obengenannten Nachteile beim Verbindungsaufbau vermieden werden können.

Diese Aufgabe wird gemäß der Erfindung durch die Merkmale des Patentanspruchs 1 gelöst. Weiterbildungen der Erfindung sind in Unteransprüchen angegeben.

Dadurch, daß von der Mobilvermittlungsstelle im Ursprungs-Mobilfunknetz eine Anfrage zu einer zentralen Teilnehmerdatenbasis im Heimat-Mobilfunknetz des umgelenkten Funkteilnehmers gerichtet wird, mit der vorübergehend eine temporäre internationale Funkteilnehmerrufnummer vergeben und temporäre Daten für den Verbindungsaufbau zum dritten Teilnehmer aufgrund der Anrufumlenkung angelegt werden können, erkennt die zentrale Teilnehmerdatenbasis, daß eine von der Mobilvermittlungsstelle im Heimat-Mobilfunknetz eintreffende Aufenthaltsabfrage nicht wie üblich zu behandeln ist. Empfängt nämlich die zentrale Teilnehmerdatenbasis innerhalb einer mit der Anfrage gestarteten Überwachungszeit eine Aufenthaltsabfrage mit einer temporären internationalen Funkteilnehmerrufnummer, werden die mit der Anfrage bereitgestellten temporären Daten für den weiteren Verbindungsaufbau ausgesendet und danach gelöscht. Die Verbindung zum dritten Teilnehmer wird dann auf Grund der temporären Daten direkt oder über das Heimat-Mobilfunknetz aufgebaut.

Durch die dynamische Vergabe von temporären internationalen Funkteilnehmerrufnummern und durch deren Verknüpfung mit temporären Daten, die nur vorübergehend Gültigkeit haben, erhält die zentrale Teilnehmerdatenbasis im Heimat-Mobilfunknetz des umgelenkten Funkteilnehmers Informationen darüber, daß der weitere Verbindungsaufbau nach der für den Funkteilnehmer eingerichteten Anrufumlenkung modifiziert durchzuführen ist. Die Art des weiteren Verbindungsaufbaus zum dritten Teilnehmer wird durch die temporären Daten festgelegt, die zusätzlich zu den ohnehin für die Teilnehmer des Mobilfunknetzes eingerichteten Teilnehmerdaten gespeichert sind. Die in der zentralen Teilnehmerdatenbasis eines Mobilfunknetzes statisch eingerichtete internationale Funkteilnehmerrufnummer des Funkteilnehmers wird nicht temporär, sondern in der Regel für eine längere Zeit statisch vergeben und erst bei Löschen des Teilnehmers im Mobilfunknetz zurückgegeben. Die neuen temporären internationalen Funkteilnehmerrufnummern gemäß der Erfindung stehen demgegenüber nicht statisch, sondern dynamisch für eine bestimmte Zeitdauer zu einer modifizierten Ausführung der Aufenthaltsabfrage, die von der Mobilvermittlungsstelle im Heimat-Mobilfunknetz des umgelenkten Funkteilnehmers ausgelöst wird, zur Verfügung.

Von Vorteil ist es, wenn eine direkte Verbindung zwischen dem Ursprungs-Mobilfunknetz und dem Ziel-Mobilfunknetz bei Erkennung der Anrufumlenkung vor der Anfrage an die zentrale Teilnehmerdatenbasis abgebaut wird und die Teilnehmerrufnummer des dritten Teilnehmers, zu dem umgelenkt wird, als temporäres Datum zur Mobilvermittlungsstelle im Heimat-Mobilfunknetz des umgelenkten Funkteilnehmers ausgesendet wird und aufgrund der empfangenen Teilnehmerrufnummer die Verbindung zum dritten Teilnehmer von dort aus aufgebaut wird.

Von Vorteil ist auch, wenn die Anfrage an die zentrale Teilnehmerdatenbasis nach der Aufenthaltsabfrage gerichtet wird und die Adresse der Mobilvermittlungsstelle im Ursprungs-Mobilfunknetz als temporäres Teilnehmerdatum zu der für den umgelenkten Funkteilnehmer zuständigen Mobilvermittlungsstelle im Ziel-Mobilfunknetz ausgesendet wird. Bei Erkennung der Anrufumlenkung wird die Verbindung zwischen dem Ursprungs-Mobilfunknetz und dem Ziel-Mobilfunknetz über das Heimat-Mobilfunknetz abgebaut und eine direkte Verbindung von der Mobilvermittlungsstelle im Ursprungs-Mobilfunknetz zum dritten Teilnehmer aufgebaut. Auf diese Weise kann die Verbindung vom anrufenden Funkteilnehmer zum dritten Teilnehmer, zu dem der Anruf umgeleitet wird, optimiert werden.

Gemäß einer anderen Weiterbildung der Erfindung können von der zentralen Teilnehmerdatenbasis mehrere temporäre internationale Funkteilnehmerrufnummern vergeben und nach dem Löschen der zugehörigen temporären Teilnehmerdaten wieder freigegeben werden.

Das Ursprungs-Mobilfunknetz, das Heimat-Mobilfunknetz und das Ziel-Mobilfunknetz decken gemaß einer Weiterbildung der Erfindung mehrere Mobilfunkgebiete in einem länderübergreifenden, digitalen GSM-Mobilfunknetz ab.

Die Erfindung wird anhand eines in Figuren dargestellten Ausführungsbeispiels erläutert.

Im einzelnen zeigen:
- Figur 1: das Prinzipschaltbild für einen Verbindungsaufbau bei direkter Verbindung eines anrufenden Funkteilnehmers mit einem umgelenkten Funkteilnehmer, für den eine Anrufumlenkung zu einem dritten Teilnehmer eingerichtet ist,
- Figur 2: den zu dem Prinzipschaltbild gemäß Figur 1 gehörigen Nachrichtenfluß zwischen den Einrichtungen der Mobilfunknetze,
- Figur 3: das Prinzipschaltbild für einen Verbindungsaufbau bei Verbindung eines anrufenden Funkteilnehmers mit einem umgelenkten Funkteilnehmer über dessen Heimat-Mobilfunknetz bei der Anrufumlenkung des Funkteilnehmers zum dritten Teilnehmer,
- Figur 4: den zum Prinzipschaltbild gemäß Figur 3 gehörigen Nachrichtenfluß und
- Figur 5: den Inhalt der im Heimat-Mobilfunknetz des umgelenkten Funkteilnehmers angeordneten zentralen Teilnehmerdatenbasis vor bzw. nach der Vergabe einer temporären internationalen Funkteilnehmerrufnummer für den Verbindungsaufbau.

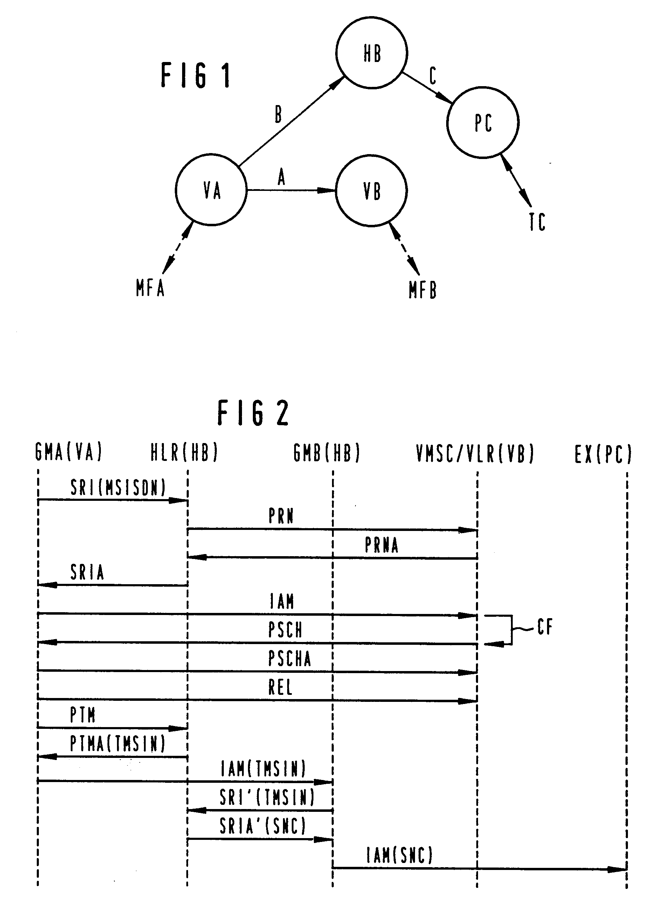

Figur 1 zeigt ein Prinzipschaltbild für einen Verbindungsaufbau bei Anrufen zwischen einem anrufenden Funkteilnehmer MFA und einem Funkteilnehmer MFB, für den eine Anrufumlenkung zu einem dritten Teilnehmer TC eingerichtet ist. Der Anruf kommt aus einem Ursprungs-Mobilfunknetz VA, indem der anrufende Funkteilnehmer MFA sich gerade aufhält, und gelangt zu einem Ziel-Mobilfunknetz VB, indem sich der umgelenkte Funkteilnehmer MFB derzeit befindet. Der Funkteilnehmer MFB ist mit seinen Teilnehmerdaten in der zentralen Teilnehmerdatenbasis seines Heimat-Mobilfunknetzes HB registriert. Der dritte Teilnehmer TC, zu dem der an den Funkteilnehmer MFB gerichtete Anruf umgelenkt wird, ist beispielsweise an ein leitungsgebundenes öffentliches Fernsprechnetz PC als Festnetzteilnehmer angeschlossen. Er kann aber auch Teilnehmer eines anderen Kommunikationsnetzes - eines Datennetzes oder eines anderen Mobilfunknetzes - sein. Angenommen sei, daß die einzelnen Mobilfunknetze VA, VB, HB mindestens zwei verschiedene Mobilfunkgebiete des digitalen, zellular aufgebauten Mobilfunknetzes nach dem GSM-Standard abdecken. Das Ursprungs-Mobilfunknetz VA, aus dem der Anruf iniiert wurde, besteht beispielsweise aus einem in Deutschland betriebenen GSM-Mobilfunknetz, während das Ziel-Mobilfunknetz VB, zu dem der Anruf weitergeleitet wird, und das Heimat-Mobilfunknetz HB ein in Frankreich betriebenes GSM-Mobilfunknetz kennzeichnen. Das öffentliche Fernsprechnetz PC ist ein leitungsgebundenes Festnetz, das in einem anderen Land als Deutschland oder Frankreich existiert.

Der Aufbau einer Verbindung A zwischen dem anrufenden Funkteilnehmer MFA im Ursprungs-Mobilfunknetz VA und dem Funkteilnehmer MFB im Ziel-Mobilfunknetz VB erfolgt direkt und nicht über das Heimat-Mobilfunknetz HB des umgelenkten Funkteilnehmers. Eine im Ursprungs-Mobilfunknetz VA angeordnete Mobilvermittlungsstelle erkennt anhand der vom anrufenden Funkteilnehmer MFA gewählten internationalen Funkteilnehmerrufnummer, daß ein Funkteilnehmer eines anderen Mobilfunknetzes erreicht werden soll, und startet eine Aufenthaltsabfrage (Interrogation). Die Aufenthaltsabfrage, die an die zentrale Teilnehmerdatenbasis im Heimat-Mobilfunknetz HB des Funkteilnehmers MFB gerichtet wird, hat bei optimaler Wegeauswahl den Aufbau der direkten Verbindung zur Folge. Im Falle einer bedingten Anrufumlenkung (Conditional Call Forwarding) für den Funkteilnehmer MFB wird die direkte Verbindung A wieder abgebaut und eine neue Verbindung, ausgehend vom Ursprungs-Mobilfunknetz VA des anrufenden Funkteilnehmers MFA, zum dritten Teilnehmer TC gesucht.

Wenn die Verbindung zum dritten Teilnehmer TC über das Heimat-Mobilfunknetz HB führen muß - beispielsweise weil die Mobilvermittlungsstelle im Ursprungs-Mobilfunknetz VA erkennt, daß eine Verbindung zum dritten Teilnehmer TC für den anrufenden Funkteilnehmer MFA über das Heimat-Mobilfunknetz HB des Funkteilnehmers MFB im Hinblick auf die Gebühren günstiger ist - , wird eine Anfrage zur zentralen Teilnehmerdatenbasis im Heimat-Mobilfunknetz HB ausgesendet. Es wird eine Verbindung B zwischen dem Ursprungs-Mobilfunknetz VA und dem Heimat-Mobilfunknetz HB und eine Verbindung C zwischen dem Heimat-Mobilfunknetz HB und dem öffentlichen Fernsprechnetz PC im Anschluß an eine Aufenthaltsabfrage, die von einer Mobilvermittlungsstelle im Heimat-Mobilfunknetz HB initiiert wird, aufgebaut. Nach Empfang der Anfrage erfolgt durch die zentrale Teilnehmerdatenbasis im Heimat-Mobilfunknetz HB die Vergabe einer temporären internationalen Funkteilnehmerrufnummer, das Anlegen temporärer Daten für den Verbindungsaufbau zum dritten Teilnehmer TC und das Starten eines Überwachungszeitgebers zur Vorgabe einer Überwachungszeit.

Durch die Anfrage aus einem anderen Mobilfunknetz erkennt die zentrale Teilnehmerdatenbasis, daß, wenn eine Aufenthaltsabfrage von der Mobilvermittlungsstelle im eigenen Heimatmobil-Mobilfunknetz HB innerhalb der vorgegebenen Überwachungszeit eintrifft, modifiziert - d.h. anders als beim Verbindungsaufbau herkömmlicher Art - zu bearbeiten ist. Sobald die Mobilvermittlungsstelle im eigenen Heimat-Mobilfunknetz HB die Aufenthaltsabfrage mit einer temporären internationalen Funkteilnehmerrufnummer an die Teilnehmerdatenbasis richtet, werden die bereitgestellten temporären Daten für den Verbindungsaufbau zum dritten Teilnehmer TC in einer Antwort auf die Aufenthaltsabfrage zur Mobilvermittlungsstelle im eigenen Heimat-Mobilfunknetz HB rückgesendet. Zuvor wird der Überwachungszeitgeber angehalten. Als temporäres Datum wird die Teilnehmerrufnummer des dritten Teilnehmers TC übertragen, anhand der die Verbindung zum dritten Teilnehmer TC direkt aufgebaut wird.

Figur 2 zeigt den Nachrichtenfluß zwischen den Einrichtungen in den vom Verbindungsaufbau gemäß dem Prinzipschaltbild nach Figur 1 betroffenen Mobilfunknetzen . Eine Mobilvermittlungsstelle GMA im Ursprungs-Mobilfunknetz VA empfängt die vom anrufenden Funkteilnehmer gewählte internationale Funkteilnehmerrufnummer MSISDN und startet, da es sich um einen Anruf zu einem Funkteilnehmer eines fremden Mobilfunknetzes handelt, eine die internationale Teilnehmerrufnummer MSISDN enthaltende Aufenthaltsabfrage SRI an die zentrale Teilnehmerdatenbasis HLR im Heimat-Mobilfunknetz HB des umgelenkten Funkteilnehmers. Von der Teilnehmerdatenbasis HLR wird daraufhin eine Anforderung PRN (Provide Roaming Number) an eine für den umgelenkten Funkteilnehmer im Ziel-Mobilfunknetz VB zuständige Mobilvermittlungsstelle VMSC mit zugehöriger Teilnehmerdatenbasis VLR ausgesendet. Die Anforderung PRN bewirkt die Rücksendung einer Wanderkennung (Roaming Number) in einer Antwort PRNA von der Mobilvermittlungsstelle VMSC zur zentralen Teilnehmerdatenbasis HLR. Die zentrale Teilnehmerdatenbasis HLR beantwortet die Aufenthaltsabfrage mit einer Nachricht SRIA, so daß von der für den anrufenden Funkteilnehmer zuständigen Mobilvermittlungsstelle GMA eine direkte Verbindung anhand der Nachricht IAM (Initial Adress Message) zu der für den umgelenkten Funkteilnehmer zuständigen Mobilvermittlungsstelle VMSC im Ziel-Mobilfunknetz VB aufgebaut werden kann.

Wird von der Mobilvermittlungsstelle VMSC eine für den Funkteilnehmer eingerichtete bedingte Anrufumlenkung TC festgestellt, erfolgt eine Sonderbehandlung der Verbindung. Die Sonderbehandlung besteht darin, daß anhand einer ersten Nachricht PSCH zwischen der Mobilvermittlungsstelle VMSC und der Mobilvermittlungsstelle GMA und anhand der Nachrichten PSCHA und REL zwischen der Mobilvermittlungsstelle GMA und der Mobilvermittlungsstelle VMSC die aufgebaute direkte Verbindung wieder abgebaut und freigegeben wird (Release).

Von der für den anrufenden Funkteilnehmer zuständigen Mobilvermittlungsstelle GMA wird wegen der festgestellten Anrufumlenkung CF eine Anfrage PTM (Provide Temporary MSISDN) an die zentrale Teilnehmerdatenbasis HLRB des umgelenkten Funkteilnehmers gerichtet, mit der von der Teilnehmerdatenbasis HLR eine freie temporäre internationale Funkteilnehmerrufnummer (Temporary MSISDN) vergeben wird. Darüber hinaus werden von der Teilnehmerdatenbasis HLR temporäre Daten für den Verbindungsaufbau zum dritten Teilnehmer, zu dem der Anruf umgelenkt wird, angelegt sowie ein Überwachungszeitgeber zur Vorgabe einer Überwachungszeit, die beispielsweise 90 Sekunden beträgt, gestartet. Als Antwort auf die Anfrage PTM wird von der Teilnehmerdatenbasis HLR in einer Nachricht PTMA die bereitgestellte temporäre internationale Funkteilnehmerrufnummer TMSIN zur anfragenden Mobilvermittlungsstelle GMA gesendet. Die Mobilvermittlungsstelle GMA initiiert daraufhin in einer Nachricht IAM mit der temporäreninternationalen Funkteilnehmerrufnummer TMSIN eine Verbindung zur Mobilvermittlungsstelle GMB im Heimat-Mobilfunknetz HB.

Empfängt die Teilnehmerdatenbasis HLR eine Aufenthaltsabfrage SRI' mit der temporären internationalen Funkteilnehmerrufnummer TMSIN von der Mobilvermittlungsstelle GMB im eigenen Heimat-Mobilfunknetz HB und erfolgt diese Aufenthaltsabfrage SRI' innerhalb der vorgegebenen Überwachungszeit, werden von der Teilnehmerdatenbasis HLR in einer Antwort SRIA' auf die Aufenthaltsabfrage temporäre Daten in Form der für den dritten Teilnehmer festgelegten Teilnehmerrufnummer SNC zur Mobilvermittlungsstelle GMB rückübertragen und der Überwachungszeitgeber angehalten. Sobald die temporären Daten ausgesendet sind, werden sie in der Teilnehmerdatenbasis HLR wieder gelöscht. Die Mobilvermittlungsstelle GMB im eigenen Heimat-Mobilfunknetz HB des umgelenkten Funkteilnehmers kann daraufhin eine direkte Verbindung anhand der Nachricht IAM, die die Teilnehmerrufnummer SNC des dritten Teilnehmers enthält, zu einer Vermittlungseinrichtung im öffentlichen Fernsprechnetz PC initiieren, an die der dritte Teilnehmer angeschlossen ist. Die Mobilvermittlungsstellen GMA und GMB sind gesonderte Mobilvermittlungsstellen (Gateway Mobile Switching Centers) in den Mobilfunknetzen, die jeweils von anderen Netzen ankommende Anrufe empfangen.

Durch den erfindungsgemäßen Verbindungsaufbau kann erreicht werden, daß eine Verbindung vom anrufenden Funkteilnehmer zum dritten Teilnehmer, zu dem auf Grund der bedingten Anrufumlenkung der Anruf weitergeleitet wird, eine direkte Verbindung hergestellt wird, ohne daß eine erneute Verbindung zwischen den Einrichtungen im Heimat-Mobilfunknetz und den Einrichtungen im Ziel-Mobilfunknetz des umgelenkten Funkteilnehmers aufgebaut, wieder abgebaut und dadurch die bedingte Anrufumlenkung zum zweiten Mal durchlaufen werden muß. Es kann durch die dynamische Vergabe von temporären internationalen Funkteilnehmerrufnummern und das Anlegen von entsprechenden temporären Daten für den weiteren Verbindungsaufbau Verbindungsaufbauzeit gespart und Signalisierungsaufwand reduziert werden.

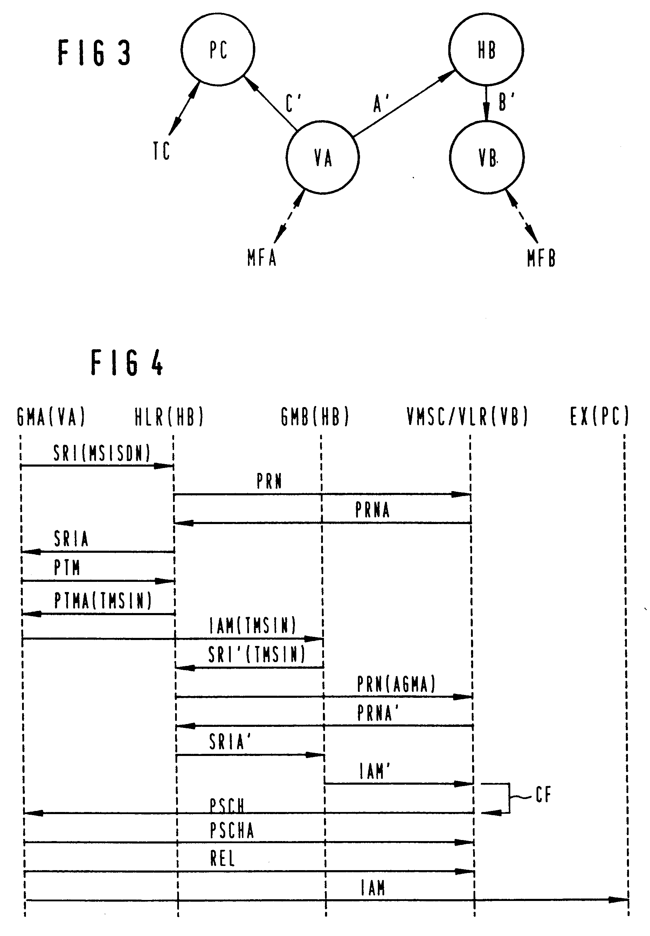

Figur 3 zeigt ein Prinzipschaltbild für den Verbindungsaufbau zwischen einem anrufenden Funkteilnehmer MFA im Ursprungs-Mobilfunknetz VA und einem Funkteilnehmer MFB in einem Ziel-Mobilfunknetz VB für den Fall, daß die Verbindung zwischen beiden Funkteilnehmern über das Heimat-Mobilfunknetz HB des angerufenen Funkteilnehmers MFB verläuft. Die für den umgelenkten Funkteilnehmer MFB eingestellte Anrufumlenkung führt zur Weitergabe des Anrufs an ein öffentliches Fernsprechnetz PC, an das der dritte Teilnehmer TC angeschlossen ist. Vom Ursprungs-Mobilfunknetz VA wird zunächst eine Verbindung A' zum Heimat-Mobilfunknetz HB und von dort eine Verbindung B' zum Ziel-Mobilfunknetz VB aufgebaut. Wenn die Umlenkbedingung zutrifft muß die gesamte Verbindung A', B' zum Ursprungs-Mobilfunknetz VA abgebaut und eine direkte Verbindung C' zum öffentlichen Fernsprechnetz PC direkt von dem Ursprungs-Mobilfunknetz VA neu hergestellt werden. Die Bedingungen für die Anrufumlenkung ist dann erfüllt, wenn beispielsweise der angerufene Funkteilnehmer nicht erreichbar ist, nach Überschreiten einer vorgegebenen Zeitdauer sich nicht meldet oder wegen eines anderen Gesprächs bereits besetzt ist.

Die zentrale Teilnehmerdatenbasis im Heimat-Mobilfunknetz HB des Funkteilnehmers MFB erhält von der Mobilvermittlungsstelle des eigenen Heimat-Mobilfunknetzes HB eine Aufenthaltsabfrage mit einer temporären internationalen Funkteilnehmerrufnummer. Danach wird von der Teilnehmerdatenbasis die Adresse der Mobilvermittlungsstelle GMA im Ursprungs-Mobilfunkgebiet VA als temporäres Datum, das nach der modifizierten Abarbeitung der Aufenthaltsabfrage wieder gelöscht wird, zur Mobilvermittlungsstelle im Ziel-Mobilfunkgebiet VB des umgelenkten Funkteilnehmers ausgesendet. Im Falle der Anrufumlenkung wird die für den Funkteilnehmer MFB im Ziel-Mobilfunknetz VB zuständige Mobilvermittlungsstelle die Sonderbehandlung des Anrufs dadurch automatisch zur Mobilvermittlungsstelle des Ursprungs-Mobilfunknetzes VA und nicht zur Mobilvermittlungsstelle des eigenen Heimat-Mobilfunknetzes HB weiterleiten. Nach der Anrufumlenkung ist die gesamte Verbindung A', B' abgebaut und es kann die Verbindung C' direkt von dem Ursprungs-Mobilfunknetz VA zum öffentlichen Fernsprechnetz PC aufgebaut werden.

Figur 4 zeigt den beim Verbindungsaufbau gemäß Prinzipschaltbild von Figur 3 erforderlichen Nachrichtenfluß zwischen den Einrichtungen in den verschiedenen Netzen. Von der Mobilvermittlungsstelle GMA im Ursprungs-Mobilfunknetz VA wird eine Aufenthaltsabfrage SRI' mit der internationalen Funkteilnehmerrufnummer MSISDN, die für den Funkteilnehmer statisch in dessen Teilnehmerdatenbasis HLR eingerichtet ist, an die Teilnehmerdatenbasis HLR im Heimat-Mobilfunknetz HB gerichtet. Von der Teilnehmerdatenbasis HLR wird daraufhin eine Wanderkennung (Roaming Number) in einer Anforderung PRN an die für den umgelenkten Funkteilnehmer zuständige Mobilvermittlungsstelle VMSC im Ziel-Mobilfunknetz VB ausgesendet, die in der Antwort PRNA die Kennung zur Teilnehmerdatenbasis HLR zurücksendet. Die Aufenthaltsabfrage SRI wird von der Teilnehmerdatenbasis HLR mit der Nachricht SRIA beantwortet, die zur Mobilvermittlungsstelle GMA rückgesendet wird.

Mit der von der Mobilvermittlungsstelle GMA initiierten Anfrage PTM an die zentrale Teilnehmerdatenbasis HLR wird darin eine temporäre internationale Funkteilnehmerrufnummer vergeben. Ebenso werden temporäre Daten für den weiteren Verbindungsaufbau angelegt und ein Überwachungszeitgeber zur Vorgabe einer Überwachungszeit gestartet. Die zentrale Teilnehmerdatenbasis HLR beantwortet die Anfrage PTM mit einer Nachricht PTMA, in der die temporäre internationale Funkteilnehmerrufnummer TMSIN zur Mobilvermittlungsstelle GMA rückgesendet wird. Die Teilnehmerdatenbasis HLR erkennt an der Anfrage PTM, daß, wenn eine Aufenthaltsabfrage von der Mobilvermittlungsstelle GMB des eigenen Heimat-Mobilfunknetzes VB vorliegt, diese Aufenthaltsabfrage anders zu bearbeiten ist. Von der Mobilvermittlungsstelle GMA wird eine Verbindung anhand der Nachricht IAM, enthaltend die temporäre internationale Funkteilnehmerrufnummer TMSIN, initiiert und zur Mobilvermittlungsstelle GMB im Heimat-Mobilfunknetz HB ausgesendet. Führt die Mobilvermittlungsstelle GMB eine Aufenthaltsabfrage SRI' mit der temporären internationalen Funkteilnehmerrufnummer TMSIN aus und empfängt die zentrale Teilnehmerdatenbasis HLR diese Aufenthaltsabfrage SRI' innerhalb der vorgegebenen Überwachungszeit, sendet die Teilnehmerdatenbasis HLR in der Nachricht PRN die Adresse AGMA der Mobilvermittlungsstelle GMA zu der für den umgelenkten Funkteilnehmer zuständigen Mobilvermittlungsstelle VMSC aus.

Wird die Aufenthaltsabfrage SRI' mit der temporären internationalen Funkteilnehmerrufnummer TMSIN nicht innerhalb der beispielsweise auf 90 Sekunden begrenzten Überwachungszeit von der zentralen Teilnehmerdatenbasis HLR empfangen, erfolgt eine Freigabe der temporären internationalen Funkteilnehmerrufnummer TMSIN, eine Aufhebung der Verknüpfung zu der ursprünglichen, von dem anrufenden Funkteilnehmer gewählten internationalen Funkteilnehmerrufnummer und eine Löschung der temporären Daten für den weiteren Verbindungsaufbau. Im vorliegenden Fall wird nach rechtzeitigem Empfang der Anfrage SRI' und der Übertragung der Adresse AGMA eine Nachricht PRNA von der Mobilvermittlungsstelle VMSC zur Teilnehmerdatenbasis HLR rückgesendet. Als Antwort auf die Aufenthaltsabfrage SRI' wird eine Nachricht SRIA' zwischen der zentralen Teilnehmerdatenbasis HLR und der Mobilvermittlungsstelle GMB übertragen, die anschließend eine Nachricht IAM zur Mobilvermittlungsstelle VMSC aussendet. Stellt die Mobilvermittlungsstelle VMSC für den umgelenkten Funkteilnehmer eine bedingte Anrufumlenkung CF fest, wird die aus den Nachrichten PSCH, PSCHA und REL bestehende Sonderbehandlung des Anrufs - die zum Abbau und zur Freigabe der Verbindung zwischen Mobilvermittlungsstelle GMA und Mobilvermittlungsstelle VMSC führt - automatisch von der Mobilvermittlungsstelle GMA im Ursprungs-Mobilfunknetz VA ausgeführt. Die Mobilvermittlungsstelle GMA erhält somit die Möglichkeit, im Anschluß an den Abbau der gesamten Verbindung eine direkte Verbindung durch Aussenden einer Nachricht IAM zur Vermittlungseinrichtung EX im öffentlichen Fernsprechnetz PC, an das der dritte Teilnehmer angeschlossen ist, auszulösen.

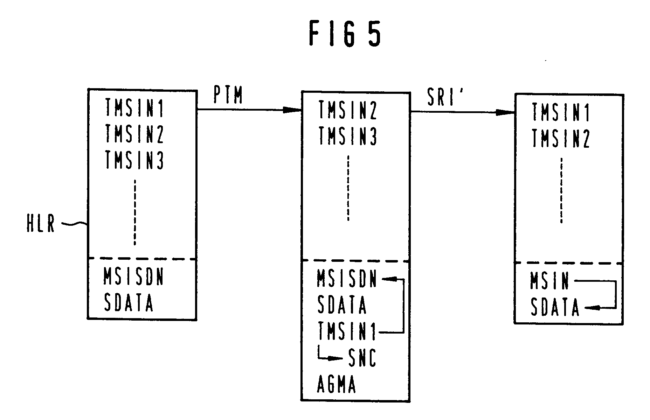

Figur 5 zeigt den Inhalt der zentralen Teilnehmerdatenbasis HLR im Heimat-Mobilfunknetz des umgelenkten Funkteilnehmers. In der Teilnehmerdatenbasis HLR werden mehrere temporäre internationale Funkteilnehmerrufnummern TMSIN1, TMSIN2, TMSIN3... für eine dynamische Vergabe bei der Anfrage PTM aus fremden Mobilfunknetzen reserviert. Diese neuen Funkteilnehmerrufnummern stehen nicht wie die ursprüngliche internationale Funkteilnehmerrufnummer, die vom anrufenden Funkteilnehmer gewählt wird, statisch zur Verfügung. Angestoßen durch die Anfrage PTM der Mobilvermittlungsstelle im fremden Mobilfunknetz des anrufenden Funkteilnehmers vergibt die Teilnehmerdatenbasis HLR beispielsweise die temporäre internationale Funkteilnehmerrufnummer TMSIN1 und verknüpft sie mit der ursprünglichen internationalen Funkteilnehmerrufnummer MSISDN und mit zusätzlichen temporären Daten, die aufgrund der Anfrage PTM vorübergehend angelegt werden. Unbeeinflußt von der Anfrage PTM bleiben die in der zentralen Teilnehmerdatenbasis HLR enthaltenen Teilnehmerdaten SDATA, die für die im jeweiligen Mobilfunknetz registrierten und durch die zugehörige internationale Funkteilnehmerrufnummer MSISDN gekennzeichneten Teilnehmer gespeichert sind.

Die temporären Daten bestehen im Ausführungsbeispiel gemäß den Figuren 1 und 2 aus der für den dritten Teilnehmer festgelegten Teilnehmerrufnummer SNC bzw. im Ausführungsbeispiel gemäß den Figuren 3 und 4 aus der Adresse AGMA der für den anrufenden Funkteilnehmer zuständigen Mobilvermittlungsstelle im Ursprungs-Mobilfunknetz. Nach der Antwort auf die Anfrage wartet die zentrale Teilnehmerdatenbasis HLR auf eine Aufenthaltsabfrage SRI' mit der temporären internationalen Funkteilnehmerrufnummer. Trifft diese Aufenthaltsabfrage SRI' innerhalb der vorgegebenen Überwachungszeit in der zentralen Teilnehmerdatenbasis HLR ein, wird die Abfrage mit den temporären Daten abgearbeitet, die temporären Daten in Form der Teilnehmerrufnummer SNC bzw. der Adresse AGMA gelöscht und die vergebene internationale Funkteilnehmerrufnummer TMSIN1 wieder freigegeben.

Erhält die zentrale Teilnehmerdatenbasis HLR innerhalb der Überwachungszeit keine Aufenthaltsabfrage SRI' von der Mobilvermittlungsstelle des eigenen Heimat-Mobilfunknetzes mit einer temporären internationalen Funkteilnehmerrufnummer, so werden die temporäre internationale Funkteilnehmerrufnummer freigegeben, die Verknüpfung zur ursprünglichen internationalen Funkteilnehmerrufnummer MSISDN aufgehoben und die zusätzlichen Daten SNC, AGMA gelöscht.

## Patentansprüche

1. Verfahren zum Verbindungsaufbau für Anrufe, die jeweils von einem aus einem Ursprungs-Mobilfunknetz (VA) anrufenden Funkteilnehmer (MFA) an einen in einem Ziel-Mobilfunknetz (VB) befindlichen Funkteilnehmer (MFB) gerichtet werden, für den eine bedingte Anrufumlenkung (CF) zu einem dritten Teilnehmer (TC) eingerichtet ist, bei dem
a. von einer für den anrufenden Funkteilnehmer (MFA) zuständigen Mobilvermittlungsstelle (GMA) des Ursprungs-Mobilfunknetzes (VA) eine Anfrage (PTM) zur Vergabe einer temporären internationalen Funkteilnehmerrufnummer (TMSIN) an eine zentrale Teilnehmerdatenbasis (HLR) im Heimat-Mobilfunknetz (HB) des umgelenkten Funkteilnehmers (MFB) gesendet wird,
b. von der zentralen Teilnehmerdatenbasis (HLR) des Heimat-Mobilfunknetzes (HB),
b.1 eine temporäre internationale Funkteilnehmerrufnummer (TMSIN) als Antwort auf die Anfrage der Mobilvermittlungsstelle (GMA) rückgesendet wird,
b.2 temporäre Daten, die den Verbindungsaufbau zum dritten Teilnehmer (TC) ermöglichen, bereitgestellt werden,
b.3 ein Überwachungszeitgeber zur Vorgabe einer Überwachungszeit gestartet wird, innerhalb der das Eintreffen einer aus dem Heimat-Mobilfunknetz (HB) kommenden Aufenthaltsabfrage (SRI'), die die temporäre internationale Funkteilnehmerrufnummer (TMSIN) enthält, überwacht wird,
b.4 bei rechtzeitigem Empfang der Aufenthaltsabfrage (SRI') die bereitgestellten temporären Daten, die den Verbindungsaufbau zum dritten Teilnehmer (TC) ermöglichen, ausgesendet werden.

2. Verfahren nach Anspruch 1,
**dadurch gekennzeichnet,**
daß der Überwachungszeitgeber von der zentralen Teilnehmerdatenbasis (HLR) angehalten wird, sobald die Aufenthaltsabfrage (SRI') eingetroffen ist.

3. Verfahren nach Anspruch 1 oder 2,
**dadurch gekennzeichnet,**
daß die temporären Daten nach dem Aussenden von der zentralen Teilnehmerdatenbasis (HLR) gelöscht werden.

4. Verfahren nach einem der Ansprüche 1 bis 3
**dadurch gekennzeichnet,**
daß eine direkte Verbindung zwischen dem Ursprungs-Mobilfunknetz (VA) und dem Ziel-Mobilfunknetz (VB) bei Erkennung der Anrufumlenkung (CF) vor der Anfrage (PTM) an die zentrale Teilnehmerdatenbasis (HLR) abgebaut wird, daß als temporäres Datum die Teilnehmerrufnummer (SNC) des dritten Teilnehmers (TC), zu dem umgelenkt wird, von der zentralen Teilnehmerdatenbasis (HLR) zu der Mobilvermittlungsstelle (GMB) im Heimat-Mobilfunknetz (HB) ausgesendet wird und daß von der Mobilvermittlungsstelle (GMB) aufgrund der empfangenen Teilnehmerrufnummer die Verbindung zum dritten Teilnehmer (TC) aufgebaut wird.

5. Verfahren nach einem der Ansprüche 1 bis 3,
**dadurch gekennzeichnet,**
daß als temporäres Datum die Adresse (AGMA) der Mobilvermittlungsstelle (GMA) des Ursprungs-Mobilfunknetzes (VA) zu der für den umgelenkten Funkteilnehmer (MFB) zuständigen Mobilvermittlungsstelle (VMSC) im Ziel-Mobilfunknetz (VB) ausgesendet wird und daß bei Erkennung der Anrufumlenkung (CF) die Verbindung zwischen dem Ursprungs-Mobilfunknetz (VA) und dem Ziel-Mobilfunknetz (VB) über das Heimat-Mobilfunknetz (HB) abgebaut und eine direkte Verbindung von der Mobilvermittlungsstelle (GMA) im Ursprungs-Mobilfunknetz (VA) zum dritten Teilnehmer (TC) aufgebaut wird.

6. Verfahren nach einem der vorhergehenden Ansprüche,
**dadurch gekennzeichnet,**
daß durch das Ursprungs-Mobilfunknetz (VA), das Heimat-Mobilfunknetz (HB) und das Ziel-Mobilfunknetz (VB) mehrere Mobilfunkgebiete eines länderübergreifenden, digitalen Mobilfunknetzes nach dem GSM-Standard abgedeckt werden.

7. Verfahren nach einem der vorhergehenden Ansprüche,
**dadurch gekennzeichnet,**
daß von der zentralen Teilnehmerdatenbasis (HLR) mehrere temporäre internationale Funkteilnehmerrufnummern (TMSIN1...) vergeben und nach dem Löschen der zugehörigen temporären Daten wieder freigegeben werden können.
